# EUROPEAN PATENT APPLICATION

(11) **EP 1 501 251 A2**
(43) Date of publication of application: **26.01.2005**
(21) Application number: 04017018.5
(22) Date of filing: 19.07.2004
(51) Int. Cl.: H04L 27/26

(54) **Frame structure for multicarrier transmission**

(30) Priority: 18.07.2003 US 488531 P; 24.11.2003 US 524528 P; 13.02.2004 US 778754; 16.07.2004 US 892626
(71) Applicant: Broadcom Corporation, Irvine, California 92618-7013 (US)
(72) Inventor: Hansen, Christopher J., 94087 Sunnyvale, CA (US)
(74) Representative: Jehle, Volker Armin, Dipl.-Ing.

(57) **Abstract**

A method for generating an orthogonal frequency division multiplexing (OFDM) frame for wireless communications begins by generating a preamble of the OFDM frame, wherein the preamble includes training information and signal information. The method continues by generating a plurality of data fields of the OFDM frame, wherein each of the plurality of data fields includes a plurality of subcarriers, wherein at least some of the plurality of data fields includes, at most, three of the plurality of subcarriers allocated for a pilot signal.

## Description

This patent application is claiming priority to provisional patent application entitled OFDM PHYSICAL LAYER HAVING REDUCED CHANNEL WIDTH, having a provisional serial number of 60/488,531, and a provisional filing date of 7/18/03, and is claiming priority to co-pending patent application entitled CONFIGURABLE SPECTRAL MASK FOR USE IN A HIGH DATA THROUGHPUT WIRELESS COMMUNICATION, having a serial number of 10/778,754, and a filing date of 2/13/04.

### BACKGROUND OF THE INVENTION

### TECHNICAL FIELD OF THE INVENTION

This invention relates generally to wireless communication systems and more particularly to various formats of wireless communications between wireless communication devices affiliated with such wireless communication systems.

### DESCRIPTION OF RELATED ART

Communication technologies that link electronic devices in a networked fashion are well known. Examples of communication networks include wired packet data networks, wireless packet data networks, wired telephone networks, wireless telephone networks, and satellite communication networks. These communication networks typically include a network infrastructure that services a plurality of client devices. The Public Switched Telephone Network (PSTN) is probably the best-known communication network and has been in existence for many years. The Internet is another well-known example of a communication network that has also been in existence for a number of years. These communication networks enable client devices to communicate with each other on a global basis. Wired Local Area Networks (LANs), e.g., Ethernets, are also quite common and support communications between networked computers and other devices within a serviced area. LANs also often link serviced devices to Wide Area Networks and the Internet. Each of these networks is generally considered a "wired" network, even though some of these networks, e.g., the PSTN, may include some transmission paths that are serviced by wireless links.

Wireless networks have been in existence for a relatively shorter period in comparison to wired networks and include, for example, cellular telephone networks, wireless LANs (WLANs), and satellite communication networks. WLANs are generally established in accordance with one or more standards, such IEEE 802.11, .11(a), .11(b), .11(g), etc, which may be jointly referred to as "IEEE 802.11 networks." In a typical IEEE 802.11 network, a plurality of wireless Access Points (APs) are wired together and each supports wireless communications with wireless communication devices (e.g., computers that include compatible wireless interfaces). The APs provide the wireless communication devices with access to networks outside the WLAN.

WLANs provide significant advantages when servicing portable devices such as portable computers, portable data terminals, and other devices that are not typically stationary and able to access a wired LAN connection. However, WLANs provide relatively low data rate service as compared to wired LANs, e.g., IEEE 802.3 networks. Currently deployed wired networks provide up to one Gigabit/second bandwidth and relatively soon, wired networks will provide up to 10 Gigabit/second bandwidths. However, because of their advantages in servicing portable devices, WLANs are often deployed so that they support wireless communications in a service area that overlays with the service area of a wired network. In such installations, devices that are primarily stationary, e.g., desktop computers, couple to the wired LAN while devices that are primarily mobile, e.g., laptop computers, couple to the WLAN. The laptop computer, however, may also have a wired LAN connection that it uses when docked to obtain relatively higher bandwidth service.

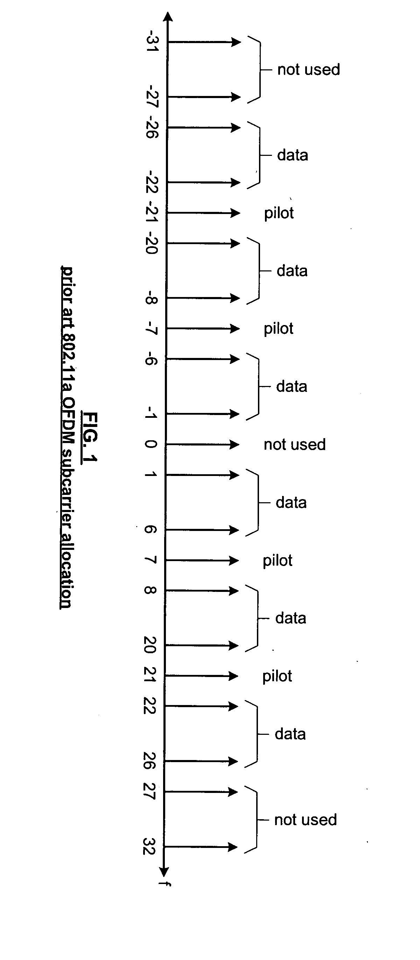

Newer wireless networking standards support relatively greater data rates. For example, the IEEE 802.11(a) standard supports data rates up to 54 Mega Bits Per Second (MBPS) as does the IEEE 802.11(g) standard. The IEEE 802.11(a) uses an Orthogonal Frequency Division Multiplexing (OFDM) physical layer to support this data rate. With the OFDM physical layer, the available spectrum is subdivided into a number of sub-carriers (tones), each of which carries a portion of a demultiplexed data stream. The IEEE 802.11(a) OFDM physical layer includes 48 data carrying tones and 4 pilot tones, with a spacing/width of 0.3125 MHz. As shown in Figure 1, subcarrier 0 (which corresponds to DC), sub carriers 27 through 32, and subcarriers -27 through -31 are not used. Subcarriers +/- 7 and +/- 21 are used for the four pilot tones, or signals. Subcarriers 1 through 6, subcarriers 8 through 20, subcarriers 22 through 26, subcarriers -1 through -6, subcarriers -8 through -20, and subcarriers -22 through -26 make up the 48 subcarriers that carry data.

While the subcarrier allocation of Figure 1 is standardized and supports a wide variety of WLAN applications, there are some WLAN applications where such a subcarrier allocation is limiting. For instance, if the channel bandwidth is narrowed or for multiple input multiple output (MIMO) wireless communications, the subcarrier allocation of Figure 1 may not be optimal and/or achievable.

Therefore, a need exists for a method and apparatus of generating an OFDM frame for narrow channel applications and/or MIMO applications.

### BRIEF SUMMARY OF THE INVENTION

The OFDM frame formatting of the present invention substantially meets these needs and others. In one embodiment, a method for generating an orthogonal frequency division multiplexing (OFDM) frame for wireless communications begins by generating a preamble of the OFDM frame, wherein the preamble includes training information and signal information. The method continues by generating a plurality of data fields of the OFDM frame, wherein each of the plurality of data fields includes a plurality of subcarriers, wherein at least some of the plurality of data fields includes, at most, three of the plurality of subcarriers allocated for a pilot signal.

In another embodiment, a method for generating an orthogonal frequency division multiplexing (OFDM) frame for multiple input multiple output (MIMO) wireless communications begins by converting a stream of data into a plurality of data streams. The method continues by converting the plurality of data streams into a plurality of OFDM frames, wherein each of the plurality of OFDM frames includes a preamble that includes training information and signal information, wherein each of the plurality of OFDM frames includes a plurality of data fields, wherein each of the plurality of data fields of each of the plurality of OFDM frames includes a plurality of subcarriers, wherein at least some of the plurality of data fields of at least one of the plurality of OFDM frames includes, at most, three of the plurality of subcarriers allocated for a pilot signal.

In yet another embodiment, a method for receiving an orthogonal frequency division multiplexing (OFDM) frame for wireless communications begins by receiving a preamble of the OFDM frame, wherein the preamble includes training information and signal information. The method continues by receiving a plurality of data fields of the OFDM frame, wherein each of the plurality of data fields includes a plurality of subcarriers, wherein, as indicated by the signals information, at least some of the plurality of data fields includes, at most, three of the plurality of subcarriers allocated for a pilot signal. The method continues by converting the plurality of data fields into inbound data.

In a further embodiment, a method for receiving an orthogonal frequency division multiplexing (OFDM) frame for wireless communications begins by receiving a preamble of the OFDM frame, wherein the preamble includes training information and signal information. The method continues by receiving a plurality of data fields of the OFDM frame, wherein each of the plurality of data fields includes a plurality of subcarriers, wherein, as indicated by the signals information, at least some of the plurality of data fields includes, at most, three of the plurality of subcarriers allocated for a pilot signal. The method continues by converting the plurality of data fields into inbound data.

In still further embodiments, one of more of such methods may be incorporated in a radio frequency transmitter and/or in a radio frequency receiver.

According to an aspect of the invention, a method for generating an orthogonal frequency division multiplexing (OFDM) frame for wireless communications is provided, the method comprising:
generating a preamble of the OFDM frame, wherein the preamble includes training information and signal information; and
generating a plurality of data fields of the OFDM frame, wherein each of the plurality of data fields includes a plurality of subcarriers, wherein at least some of the plurality of data fields includes, at most, three of the plurality of subcarriers allocated for a pilot signal.

Advantageously, the method further comprises:
transmitting the OFDM frame over a narrow band channel, wherein the narrow band channel has a channel width less than twenty mega-Hertz.

Advantageously, the generating the plurality of data fields comprises:
utilizing subcarrier positions plus seven and minus seven of each of the at least some of the plurality of data fields to carry data; and
nulling subcarrier positions plus one and minus one of each of the at least some of the plurality of data fields.

Advantageously, the generating the plurality of data fields comprises:
utilizing subcarrier positions plus twenty-one and minus twenty-one of each of the at least some of the plurality of data fields to carry data; and
nulling subcarrier positions plus one and minus one of the at least some of the plurality of data fields.

Advantageously, the generating the plurality of data fields comprises:
nulling subcarrier points plus one and minus one of each of the at least some of the plurality of data fields;
for at least one of the at least some of the plurality of data fields, utilizing subcarrier positions plus seven and minus seven to carry data; and
for at least another one of the at least some of the plurality of data fields, utilizing subcarrier positions plus twenty-one and minus twenty-one to carry data.

Advantageously, the generating the preamble comprises:
generating the signal information to indicate which of the plurality of subcarriers will be allocated for pilot signals.

According to a further aspect of the invention, a method for generating an orthogonal frequency division multiplexing (OFDM) frame for multiple input multiple output (MIMO) wireless communications comprises:
converting a stream of data into a plurality of data streams; and
converting the plurality of data streams into a plurality of OFDM frames, wherein each of the plurality of OFDM frames includes a preamble that includes training information and signal information, wherein each of the plurality of OFDM frames includes a plurality of data fields, wherein each of the plurality of data fields of each of the plurality of OFDM frames includes a plurality of subcarriers, wherein at least some of the plurality of data fields of at least one of the plurality of OFDM frames includes, at most, three of the plurality of subcarriers allocated for a pilot signal.

Advantageously, the at least some of the plurality of data fields of the at least one of the plurality of OFDM frames comprises:
subcarrier positions plus seven and minus seven carrying data and each of subcarrier positions plus twenty-one and minus twenty-one carrying the pilot signal.

Advantageously, the at least some of the plurality of data fields of the at least one of the plurality of OFDM frames comprises:
subcarrier positions plus twenty-one and minus twenty-one carrying data and each of subcarrier positions plus seven and minus seven carrying the pilot signal.

Advantageously, the at least some of the plurality of data fields of the at least one of the plurality of OFDM frames comprises:
for at least one of the at least some of the plurality of data fields, utilizing subcarrier positions plus seven and minus seven to carry data; and
for at least another one of the at least some of the plurality of data fields, utilizing subcarrier positions plus twenty-one and minus twenty-one to carry data.

Advantageously, the method further comprises:
generating the signal information to indicate which of the plurality of subcarriers of each of the data fields will be allocated for pilot signals.

Advantageously, the converting the plurality of data streams into a plurality of OFDM frames comprises:
generating a first one of the OFDM frames to includes the plurality of data fields having four pilot signals; and
generating remaining ones of the OFDM frames to include the plurality of data fields having less than four pilot signals.

According to an aspect of the invention, a method for receiving an orthogonal frequency division multiplexing (OFDM) frame for wireless communications comprises:
receiving a preamble of the OFDM frame, wherein the preamble includes training information and signal information;
receiving a plurality of data fields of the OFDM frame, wherein each of the plurality of data fields includes a plurality of subcarriers, wherein, as indicated by the signals information, at least some of the plurality of data fields includes, at most, three of the plurality of subcarriers allocated for a pilot signal; and
converting the plurality of data fields into inbound data.

Advantageously, the method further comprises:
receiving the OFDM frame over a narrow band channel, wherein the narrow band channel has a channel width less than twenty mega-Hertz.

Advantageously, the receiving the plurality of data fields comprises:
recovering data from subcarrier positions plus seven and minus seven of each of the at least some of the plurality of data fields; and
recovering null data from subcarrier positions plus one and minus one of each of the at least some of the plurality of data fields.

Advantageously, the receiving the plurality of data fields comprises:
recovering data from subcarrier positions plus twenty-one and minus twenty-one of each of the at least some of the plurality of data fields; and
recovering null data from subcarrier positions plus one and minus one of the at least some of the plurality of data fields.

Advantageously, the receiving the plurality of data fields comprises:
recovering null data from subcarrier points plus one and minus one of each of the at least some of the plurality of data fields;
for at least one of the at least some of the plurality of data fields, recovering data from subcarrier positions plus seven and minus seven; and
for at least another one of the at least some of the plurality of data fields, recovering data from subcarrier positions plus twenty-one and minus twenty-one.

According to an aspect of the invention, a method for receiving an orthogonal frequency division multiplexing (OFDM) frame for multiple input multiple output (MIMO) wireless communications comprises:
receiving a plurality of OFDM frames, wherein each of the plurality of OFDM frames includes a preamble that includes training information and signal information, wherein each of the plurality of OFDM frames includes a plurality of data fields, wherein each of the plurality of data fields of each of the plurality of OFDM frames includes a plurality of subcarriers, wherein, as indicated by the signal information, at least some of the plurality of data fields of at least one of the plurality of OFDM frames includes, at most, three of the plurality of subcarriers allocated for a pilot signal;
converting the plurality of OFDM frames into a plurality of data streams; and
converting the plurality of data streams into a stream of data.

Advantageously, the at least some of the plurality of data fields of the at least one of the plurality of OFDM frames comprises:
subcarrier positions plus seven and minus seven carrying data and each of subcarrier positions plus twenty-one and minus twenty-one carrying the pilot signal.

Advantageously, the at least some of the plurality of data fields of the at least one of the plurality of OFDM frames comprises:
subcarrier positions plus twenty-one and minus twenty-one carrying data and each of subcarrier positions plus seven and minus seven carrying the pilot signal.

Advantageously, the at least some of the plurality of data fields of the at least one of the plurality of OFDM frames comprises:
for at least one of the at least some of the plurality of data fields, recovering data from subcarrier positions plus seven and minus seven; and
for at least another one of the at least some of the plurality of data fields, recovering data from subcarrier positions plus twenty-one and minus twenty-one.

Advantageously, the plurality of OFDM frames comprises:
a first one of the OFDM frames including the plurality of data fields having four pilot signals; and
remaining ones of the OFDM frames including the plurality of data fields having less than four pilot signals.

According to an aspect of the invention, a radio frequency (RF) transmitter comprises:
a baseband processing module operably coupled to generate an orthogonal frequency division multiplexing (OFDM) frame by:
   generating a preamble of the OFDM frame, wherein the preamble includes training information and signal information; and
   generating a plurality of data fields of the OFDM frame, wherein each of the plurality of data fields includes a plurality of subcarriers, wherein at least some of the plurality of data fields includes, at most, three of the plurality of subcarriers allocated for a pilot signal; and
RF transmission section operably coupled to convert the OFDM frame into outbound RF signals.

Advantageously, the transmitter further comprises:
generating the OFDM frame for transmission over a narrow band channel, wherein the narrow band channel has a channel width less than twenty mega-Hertz.

Advantageously, the generating the plurality of data fields comprises:
utilizing subcarrier positions plus seven and minus seven of each of the at least some of the plurality of data fields to carry data; and
nulling subcarrier positions plus one and minus one of each of the at least some of the plurality of data fields.

Advantageously, the generating the plurality of data fields comprises:
utilizing subcarrier positions plus twenty-one and minus twenty-one of each of the at least some of the plurality of data fields to carry data; and
nulling subcarrier positions plus one and minus one of the at least some of the plurality of data fields.

Advantageously, the generating the plurality of data fields comprises:
nulling subcarrier points plus one and minus one of each of the at least some of the plurality of data fields;
for at least one of the at least some of the plurality of data fields, utilizing subcarrier positions plus seven and minus seven to carry data; and
for at least another one of the at least some of the plurality of data fields, utilizing subcarrier positions plus twenty-one and minus twenty-one to carry data.

Advantageously, the generating the preamble comprises:
generating the signal information to indicate which of the plurality of subcarriers will be allocated for pilot signals.

According to an aspect of the invention, a radio frequency (RF) transmitter comprises:
a baseband processing module operably coupled to generate an orthogonal frequency division multiplexing (OFDM) frame for multiple input multiple output (MIMO) wireless communications by:
   converting a stream of data into a plurality of data streams; and
   converting the plurality of data streams into a plurality of OFDM frames, wherein each of the plurality of OFDM frames includes a preamble that includes training information and signal information, wherein each of the plurality of OFDM frames includes a plurality of data fields, wherein each of the plurality of data fields of each of the plurality of OFDM frames includes a plurality of subcarriers, wherein at least some of the plurality of data fields of at least one of the plurality of OFDM frames includes, at most, three of the plurality of subcarriers allocated for a pilot signal; and
RF transmission section operably coupled to convert the plurality of OFDM frames into a plurality of outbound RF signals.

Advantageously, the at least some of the plurality of data fields of the at least one of the plurality of OFDM frames comprises:
subcarrier positions plus seven and minus seven carrying data and each of subcarrier positions plus twenty-one and minus twenty-one carrying the pilot signal.

Advantageously, the at least some of the plurality of data fields of the at least one of the plurality of OFDM frames comprises:
subcarrier positions plus twenty-one and minus twenty-one carrying data and each of subcarrier positions plus seven and minus seven carrying the pilot signal.

Advantageously, the at least some of the plurality of data fields of the at least one of the plurality of OFDM frames comprises:
for at least one of the at least some of the plurality of data fields, utilizing subcarrier positions plus seven and minus seven to carry data; and
for at least another one of the at least some of the plurality of data fields, utilizing subcarrier positions plus twenty-one and minus twenty-one to carry data.

Advantageously, the baseband processing module further functions to:
generate the signal information to indicate which of the plurality of subcarriers of each of the data fields will be allocated for pilot signals.

Advantageously, the converting the plurality of data streams into a plurality of OFDM frames comprises:
generating a first one of the OFDM frames to includes the plurality of data fields having four pilot signals; and
generating remaining ones of the OFDM frames to include the plurality of data fields having less than four pilot signals.

According to an aspect of the invention, a radio frequency (RF) receiver comprises:
a RF receiver section operably coupled to convert inbound RF signals into an orthogonal frequency division multiplexing (OFDM) frame; and
a baseband processing module operably coupled to:
   receive a preamble of the OFDM frame, wherein the preamble includes training information and signal information; and
   receive a plurality of data fields of the OFDM frame, wherein each of the plurality of data fields includes a plurality of subcarriers, wherein, as indicated by the signals information, at least some of the plurality of data fields includes, at most, three of the plurality of subcarriers allocated for a pilot signal; and
   convert the plurality of data fields into inbound data.

Advantageously, the RF receiver section further functions to:
receive the OFDM frame over a narrow band channel, wherein the narrow band channel has a channel width less than twenty mega-Hertz.

Advantageously, the receiving the plurality of data fields comprises:
recovering data from subcarrier positions plus seven and minus seven of each of the at least some of the plurality of data fields; and
recovering null data from subcarrier positions plus one and minus one of each of the at least some of the plurality of data fields.

Advantageously, the receiving the plurality of data fields comprises:
recovering data from subcarrier positions plus twenty-one and minus twenty-one of each of the at least some of the plurality of data fields; and
recovering null data from subcarrier positions plus one and minus one of the at least some of the plurality of data fields.

Advantageously, the receiving the plurality of data fields comprises:
recovering null data from subcarrier points plus one and minus one of each of the at least some of the plurality of data fields;
for at least one of the at least some of the plurality of data fields, recovering data from subcarrier positions plus seven and minus seven; and
for at least another one of the at least some of the plurality of data fields, recovering data from subcarrier positions plus twenty-one and minus twenty-one.

According to an aspect of the invention, a radio frequency (RF) receiver comprises:
a RF receiver section operably coupled to, for multiple input multiple output (MIMO) wireless communications, convert inbound RF signals into a plurality of orthogonal frequency division multiplexing (OFDM) frames; and
a baseband processing module operably coupled to:
   receive the plurality of OFDM frames, wherein each of the plurality of OFDM frames includes a preamble that includes training information and signal information, wherein each of the plurality of OFDM frames includes a plurality of data fields, wherein each of the plurality of data fields of each of the plurality of OFDM frames includes a plurality of subcarriers, wherein, as indicated by the signal information, at least some of the plurality of data fields of at least one of the plurality of OFDM frames includes, at most, three of the plurality of subcarriers allocated for a pilot signal;
   convert the plurality of OFDM frames into a plurality of data streams; and
   convert the plurality of data streams into a stream of data.

Advantageously, the at least some of the plurality of data fields of the at least one of the plurality of OFDM frames comprises:
subcarrier positions plus seven and minus seven carrying data and each of subcarrier positions plus twenty-one and minus twenty-one carrying the pilot signal.

Advantageously, the at least some of the plurality of data fields of the at least one of the plurality of OFDM frames comprises:
subcarrier positions plus twenty-one and minus twenty-one carrying data and each of subcarrier positions plus seven and minus seven carrying the pilot signal.

Advantageously, the at least some of the plurality of data fields of the at least one of the plurality of OFDM frames comprises:
for at least one of the at least some of the plurality of data fields, recovering data from subcarrier positions plus seven and minus seven; and
for at least another one of the at least some of the plurality of data fields, recovering data from subcarrier positions plus twenty-one and minus twenty-one.

Advantageously, the plurality of OFDM frames comprises:
a first one of the OFDM frames including the plurality of data fields having four pilot signals; and
remaining ones of the OFDM frames including the plurality of data fields having less than four pilot signals.

### BRIEF DESCRIPTION OF THE SEVERAL VIEWS OF THE DRAWINGS

Figure 1 is a diagram of a prior art OFDM frame sub-carrier allocation;
Figure 2 is a schematic block diagram of a wireless communication system in accordance with the present invention;
Figure 3 is a schematic block diagram of a wireless communication device in accordance with the present invention;
Figure 4 is a diagram of a wireless communication in accordance with the present invention;
Figure 5 is a diagram illustrating OFDM frame sub-carrier allocation in accordance with the present invention;
Figure 6 is an alternate diagram of OFDM frame sub-carrier allocations in accordance with the present invention;
Figure 7 is a table corresponding to 802.11a and narrower channel applications in accordance with the present invention;
Figure 8 is a diagram of an OFDM baseband signal and corresponding DC notch filter in accordance with the present invention;
Figure 9 is a diagram of OFDM sub-carrier channel allocations for a narrow channel in accordance with the present invention;
Figure 10 is a schematic block diagram of multiple-input-multiple-output wireless communications in accordance with the present invention; and
Figure 11 is a schematic block diagram of a wireless communication device in accordance with the present invention.

### DETAILED DESCRIPTION OF THE INVENTION

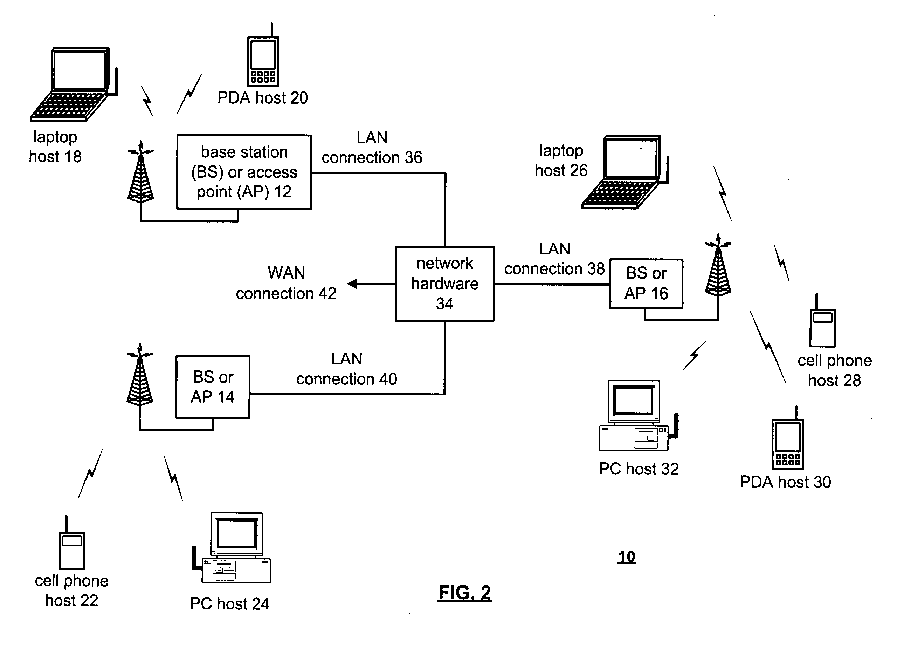

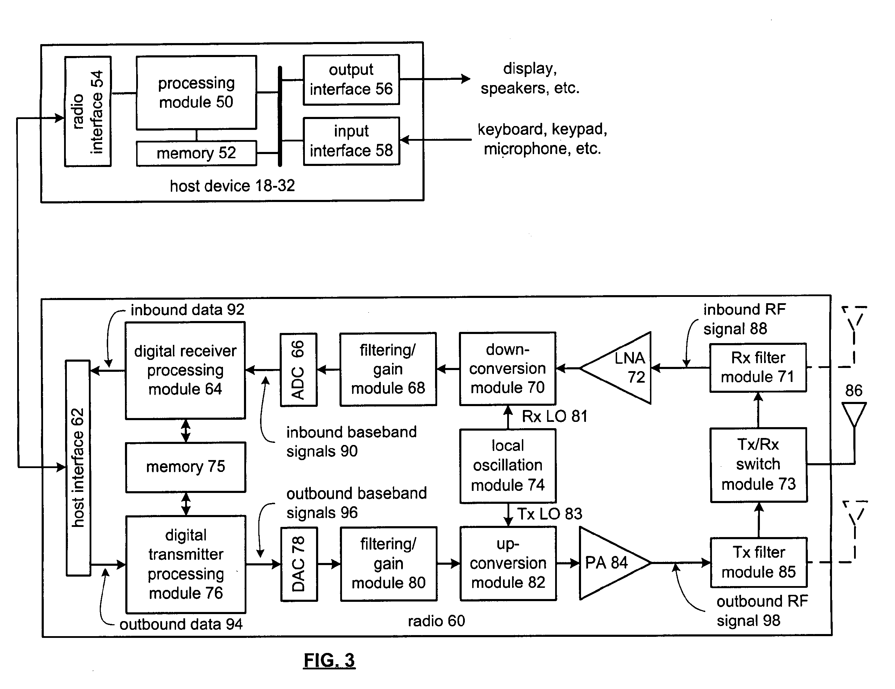

Figure 2 is a schematic block diagram illustrating a communication system 10 that includes a plurality of base stations and/or access points 12-16, a plurality of wireless communication devices 18-32 and a network hardware component 34. The wireless communication devices 18-32 may be laptop host computers 18 and 26, personal digital assistant hosts 20 and 30, personal computer hosts 24 and 32 and/or cellular telephone hosts 22 and 28. The details of the wireless communication devices will be described in greater detail with reference to Figure 3.

The base stations or access points 12-16 are operably coupled to the network hardware 34 via local area network connections 36, 38 and 40. The network hardware 34, which may be a router, switch, bridge, modem, system controller, et cetera provides a wide area network connection 42 for the communication system 10. Each of the base stations or access points 12-16 has an associated antenna or antenna array to communicate with the wireless communication devices in its area. Typically, the wireless communication devices register with a particular base station or access point 12-14 to receive services from the communication system 10. For direct connections (i.e., point-to-point communications), wireless communication devices communicate directly via an allocated channel.

Typically, base stations are used for cellular telephone systems and like-type systems, while access points are used for in-home or in-building wireless networks. Regardless of the particular type of communication system, each wireless communication device includes a built-in radio and/or is coupled to a radio. Note that one or more of the access points and affiliated wireless communication devices may be within a building.

Figure 3 is a schematic block diagram illustrating a wireless communication device that includes the host device 18-32 and an associated radio 60. For cellular telephone hosts, the radio 60 is a built-in component. For personal digital assistants hosts, laptop hosts, and/or personal computer hosts, the radio 60 may be built-in or an externally coupled component.

As illustrated, the host device 18-32 includes a processing module 50, memory 52, a radio interface 54, an input interface 58, and an output interface 56. The processing module 50 and memory 52 execute the corresponding instructions that are typically done by the host device. For example, for a cellular telephone host device, the processing module 50 performs the corresponding communication functions in accordance with a particular cellular telephone standard.

The radio interface 54 allows data to be received from and sent to the radio 60. For data received from the radio 60 (e.g., inbound data), the radio interface 54 provides the data to the processing module 50 for further processing and/or routing to the output interface 56. The output interface 56 provides connectivity to an output display device such as a display, monitor, speakers, et cetera such that the received data may be displayed. The radio interface 54 also provides data from the processing module 50 to the radio 60. The processing module 50 may receive the outbound data from an input device such as a keyboard, keypad, microphone, et cetera via the input interface 58 or generate the data itself. For data received via the input interface 58, the processing module 50 may perform a corresponding host function on the data and/or route it to the radio 60 via the radio interface 54.

Radio 60 includes a host interface 62, digital receiver processing module 64, an analog-to-digital converter 66, a filtering/gain module 68, an IF mixing down conversion stage 70, a receiver filter 71, a low noise amplifier 72, a transmitter/receiver switch 73, a local oscillation module 74, memory 75, a digital transmitter processing module 76, a digital-to-analog converter 78, a filtering/gain module 80, an IF mixing up conversion stage 82, a power amplifier 84, a transmitter filter module 85, and an antenna 86. The antenna 86 may be a single antenna that is shared by the transmit and receive paths as regulated by the Tx/Rx switch 73, or may include separate antennas for the transmit path and receive path. The antenna implementation will depend on the particular standard to which the wireless communication device is compliant.

The digital receiver processing module 64 and the digital transmitter processing module 76, in combination with operational instructions stored in memory 75, execute digital receiver functions and digital transmitter functions, respectively. The digital receiver functions include, but are not limited to, digital intermediate frequency to baseband conversion, demodulation, constellation demapping, decoding, and/or descrambling. The digital transmitter functions include, but are not limited to, scrambling, encoding, constellation mapping, modulation, and/or digital baseband to IF conversion. The digital receiver and transmitter processing modules 64 and 76 may be implemented using a shared processing device, individual processing devices, or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory 75 may be a single memory device or a plurality of memory devices. Such a memory device may be a read-only memory, random access memory, volatile memory, non-volatile memory, static memory, dynamic memory, flash memory, and/or any device that stores digital information. Note that when the processing module 64 and/or 76 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

In operation, the radio 60 receives a stream of outbound data 94 from the host device via the host interface 62. The host interface 62 routes the outbound data 94 to the digital transmitter processing module 76, which processes the outbound data 94 in accordance with a particular wireless communication standard (e.g., IEEE 802.11, Bluetooth, et cetera) to produce outbound baseband signals 96. The outbound baseband signals 96, which include OFDM frames, will be digital base-band signals (e.g., have a zero IF) or a digital low IF signals, where the low IF typically will be in the frequency range of one hundred kilohertz to a few megahertz.

The digital-to-analog converter 78 converts the outbound baseband signals 96 from the digital domain to the analog domain. The filtering/gain module 80 filters and/or adjusts the gain of the analog signals prior to providing it to the IF mixing stage 82. The IF mixing stage 82 converts the analog baseband or low IF signals into RF signals based on a transmitter local oscillation 83 provided by local oscillation module 74. The power amplifier 84 amplifies the RF signals to produce outbound RF signals 98, which are filtered by the transmitter filter module 85. The antenna 86 transmits the outbound RF signals 98 to a targeted device such as a base station, an access point and/or another wireless communication device.

The radio 60 also receives inbound RF signals 88 via the antenna 86, which were transmitted by a base station, an access point, or another wireless communication device. The antenna 86 provides the inbound RF signals 88 to the receiver filter module 71 via the Tx/Rx switch 73, where the Rx filter 71 bandpass filters the inbound RF signals 88. The Rx filter 71 provides the filtered RF signals to low noise amplifier 72, which amplifies the signals 88 to produce an amplified inbound RF signals. The low noise amplifier 72 provides the amplified inbound RF signals to the IF mixing module 70, which directly converts the amplified inbound RF signals into an inbound low IF signals or baseband signals based on a receiver local oscillation 81 provided by local oscillation module 74. The down conversion module 70 provides the inbound low IF signals or baseband signals to the filtering/gain module 68. The filtering/gain module 68 filters and/or gains the inbound low IF signals or the inbound baseband signals to produce filtered inbound signals.

The analog-to-digital converter 66 converts the filtered inbound signals from the analog domain to the digital domain to produce inbound baseband signals 90, where the inbound baseband signals 90, which include OFDM frames, will be digital base-band signals or digital low IF signals, where the low IF typically will be in the frequency range of one hundred kilohertz to a few megahertz.. The digital receiver processing module 64 decodes, descrambles, demaps, and/or demodulates the inbound baseband signals 90 to recapture a stream of inbound data 92 in accordance with the particular wireless communication standard being implemented by radio 60. The host interface 62 provides the recaptured inbound data 92 to the host device 18-32 via the radio interface 54.

As one of average skill in the art will appreciate, the wireless communication device of figure 3 may be implemented using one or more integrated circuits. For example, the host device may be implemented on one integrated circuit, the digital receiver processing module 64, the digital transmitter processing module 76 and memory 75 may be implemented on a second integrated circuit, and the remaining components of the radio 60, less the antenna 86, may be implemented on a third integrated circuit. As an alternate example, the radio 60 may be implemented on a single integrated circuit. As yet another example, the processing module 50 of the host device and the digital receiver and transmitter processing modules 64 and 76 may be a common processing device implemented on a single integrated circuit. Further, the memory 52 and memory 75 may be implemented on a single integrated circuit and/or on the same integrated circuit as the common processing modules of processing module 50 and the digital receiver and transmitter processing module 64 and 76.

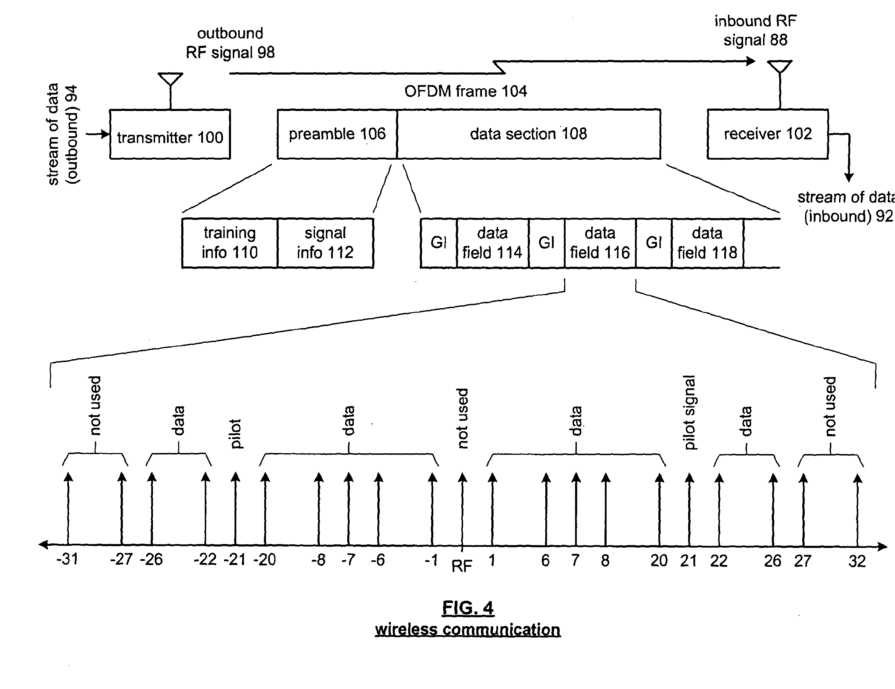

Figure 4 is a diagram of a wireless communication between two wireless communication devices. As shown, a 1^{st} wireless communication device includes a transmitter 100 and a 2^{nd} communication device includes a receiver 102. Each of the wireless communication devices may be implemented as previously described with reference to Figure 3.

As shown, the transmitter 100 receives a stream of outbound data 94 and converts it into outbound RF signals 98. The outbound RF signals include OFDM frames 104 that are conveyed from the transmitter 100 to the receiver 102. The receiver 102 receives the OFDM frames 104 as inbound RF signals 88 and converts them into a stream of inbound data 92.

An OFDM frame 104 includes a preamble section 106 and a data section 108. The preamble section 106 includes training information 110 and signal field information 112. The training information 110 may include, for example, for an 802.11a application or other 802.11 applications, a short training sequence, guard intervals and long training sequences. The signal information section 112 may be a signal field in accordance with 802.11a or other 802.11 specifications and provide information relating to the length of the OFDM frame 104, data rate, et cetera. In addition, the signal information 112 may include an indication as to which of the plurality of sub-carriers in the data section of the OFDM frame will function as pilot signals or tones.

The data section 108 includes a plurality of guard intervals (GI) and a plurality of data fields 114-118. Each of the data fields 114-118 contains data that is carried within 64 sub-carriers of an OFDM frame. In one embodiment, as shown, data field 116 includes 64 sub-carriers centered about the RF frequency of the RF signals 98. For a 20 MHz channel, the spacing of the sub-carriers is 312.5 KHz, which are represented by the arrow signals.

As is further shown, some of the sub-carriers are not used..In particular sub-carrier 0, sub-carriers 27-32 and sub-carriers -27 through -31 are not used. In this instance, only two pilot signals are used and are positioned at sub-carrier 21 and sub-carrier -21. In this embodiment, sub-carrier +7 and -7, which in accordance with the 802.11 a specification are used for pilot tones, are used to carry data. As such, more data may be represented within a particular data field by utilizing more of the sub-carriers for data conveyance and less for pilot signals.

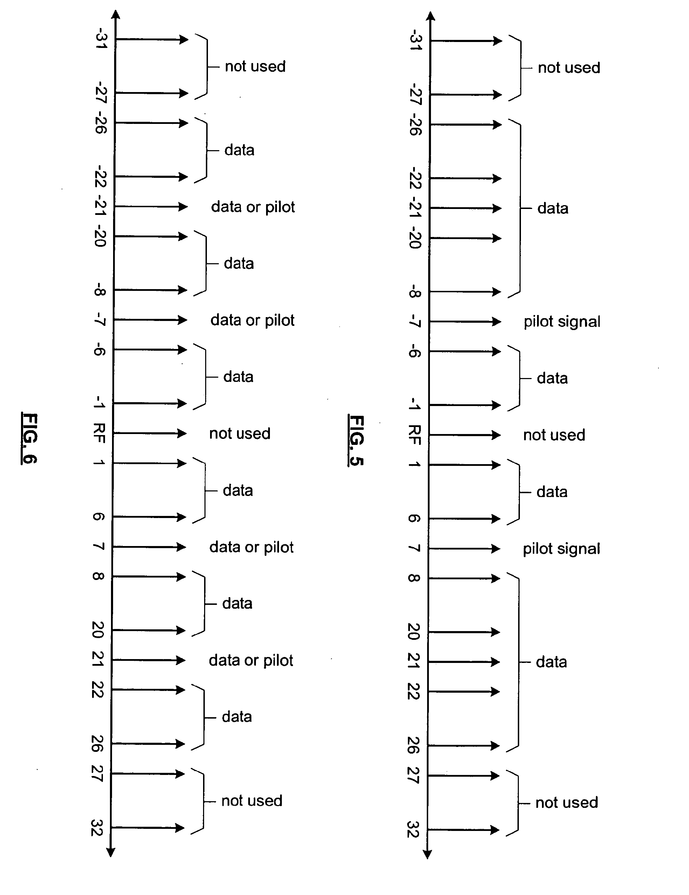

Figure 5 illustrates an alternate sub-carrier allocation of an OFDM frame. In this instance, pilot signals are positioned at sub-carriers 7 and -7 while sub-carriers +21 and -21 are used to carry data. Note that from data field to data field within an OFDM frame, the sub-carrier allocation may vary as shown in Figure 4 to Figure 5 on a field-by-field basis, on some pre-described pattern, or may be fixed to the allocation as shown in Figure 4 or Figure 5.

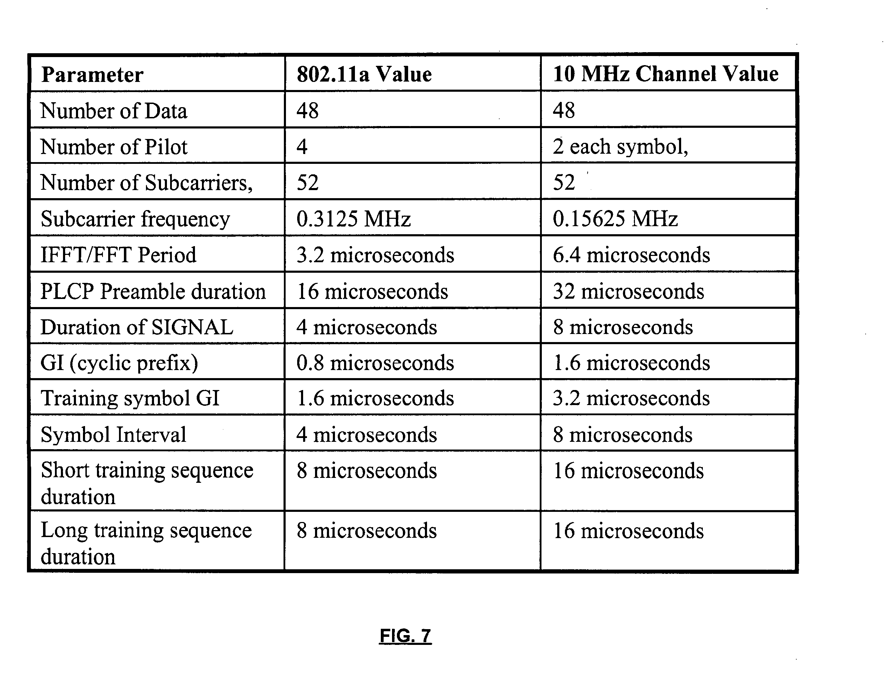

Figure 6 illustrates another sub-carrier allocation within an OFDM frame. In this instance, sub-carrier 0, 27-32 and -27 through -31 are not used. Sub-carriers 1-6, 8-20, 22-26, -1 through -6, -8 through -20, and -22 through -26 are used to carry data. In this embodiment, sub-carriers +/-7 and sub-carriers +/-21 may be used to carry data and/or a pilot signal. As such, 0 to 4 of the sub-carriers +/-7 and +/-21 may be used to carry a pilot tone.

Figure 7 is a table illustrating the characteristics of a physical layer that operates consistently with an embodiment of the present invention. The physical layer of the present invention resides within a 10 MHz channel and is OFDM based. It has many similarities to the IEEE 802.11(a) physical layer and with some differences. FIG. 3 compares the physical layer o the 10 MHz OFDM physical layer of the present invention to the IEEE 802.11(a) physical layer. The 10 MHz OFDM physical layer of the present invention may operate in various frequency bands including the bands of 4.9-5.0 GHz and 5.03-5.091 GHz. The physical layer operates such that it has a maximum range of 3 Km, a maximum licensed transmit power of 250 mw; 2500 mw EIRP, and a maximum unlicensed transmit power of 100 mw.

Path Loss (obstructed channel) model for the physical layer is described by: *L*(*d*) = *L*(*d*₀) + 10*n*log₁₀(*d*/*d*₀) + *X*_{σ} where
*d*₀ =1;*L*(d₀) =46.6*dB*;*n* = 2.58;σ = 9.31 with a typical value at 500 m of 116 dB +/- 9.3 dB. The delay spread for the physical layer has a mean of mean of 275.9 ns and a standard deviation of 352 ns. Because the physical layer has a longer delay spread than the IEEE 802.11(a) physical layer (50 nS delay spread channel), a guard interval (cyclic prefix) is required. Further, because the physical layer has a greater path loss than the IEEE 802.11(a) physical layer, a receiver supporting the physical layer needs improved sensitivity.

As contrasted to the IEEE 802.11(a) physical layer, with the receiver bandwidth reduced by a factor of 2, the SNR of the physical layer is improved by 3 dB. The length of the guard interval (cyclical prefix) is doubled to 1.6 microseconds. The symbol length is doubled to maintain the same amount of guard interval overhead as IEEE 802.11(a). A 64 point Fast Fourier Transform (FFT) may also be used with the physical layer, as it is used with the IEEE 802.11(a) physical layer.

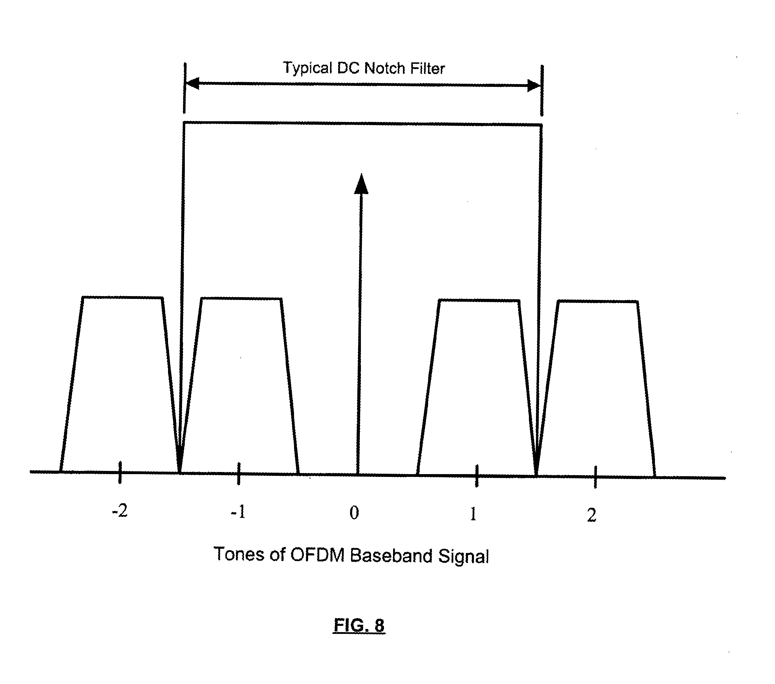

Figure 8 is a graph illustrating the manner in which tones of the physical layer are managed according to an embodiment of the present invention. Because the bandwidth of the physical layer is reduced (as compared to the bandwidth of the IEEE 802.11(a) physical layer), the center tones, tone -1 and tone +1 are nearer DC. Many receiver designs incorporate a notch filter at DC. Normal frequency offset between supported mobile terminals effectively moves this notch away from DC. With the closer tone spacing, the effect of frequency offset is more severe. In a most severe operating condition, frequency offset may cause the notch filter to remove a portion of either tone -1 or tone +1.

Thus, according to the present invention, the inner two data sub-carriers (tone -1 and tone +1) are removed/not used to accommodate the frequency offsets. Data that is specified to be carried on tones -1 and +1 by the IEEE 802.11(a) physical layer is moved to tones -21, -7, 7, and 21 such that it is alternated with the pilots on these sub-carriers. With this modification, the physical layer includes a dead zone width of 407.28 KHz + the receiver Notch Bandwidth.

In one operation, the physical layer alternates the tones used according to k = symbol index mod 6 (starting from SIGNAL symbol as zero):
- k = 0; data on tones {-21, -7} k = 1; {-21, 7}
- k = 2; {-21, 21} k = 3; {-7,7}
- k = 4; {-7, 21} k = 5; {7, 21}

This solution maintains frequency diversity of pilots. Further, Short and Long training symbols are generated the same way as in IEEE 802.11 (a) section 17.3.3, except time period for IFFT is lengthened by a factor of 2. PHY rates of 3, 4.5, 6, 9, 12, 18, 24, 27 Mbps are supported.

These longer symbol times and air propagation times require MAC timing changes (as compared to the IEEE 802.11(a) physical layer. These timing changes are summarized by:
- aCCATime increases from 4 to 8 microseconds
- aAirPropagationTime increases from « 1 microsecond to 2 microseconds
- aSlotTIME = 14 microseconds
- aSIFSTIME = 16 microseconds (no change)
- PIFS = 30 microseconds (SIFS + SLOT)
- DIFS = 44 microseconds (SIFS + 2*SLOT)

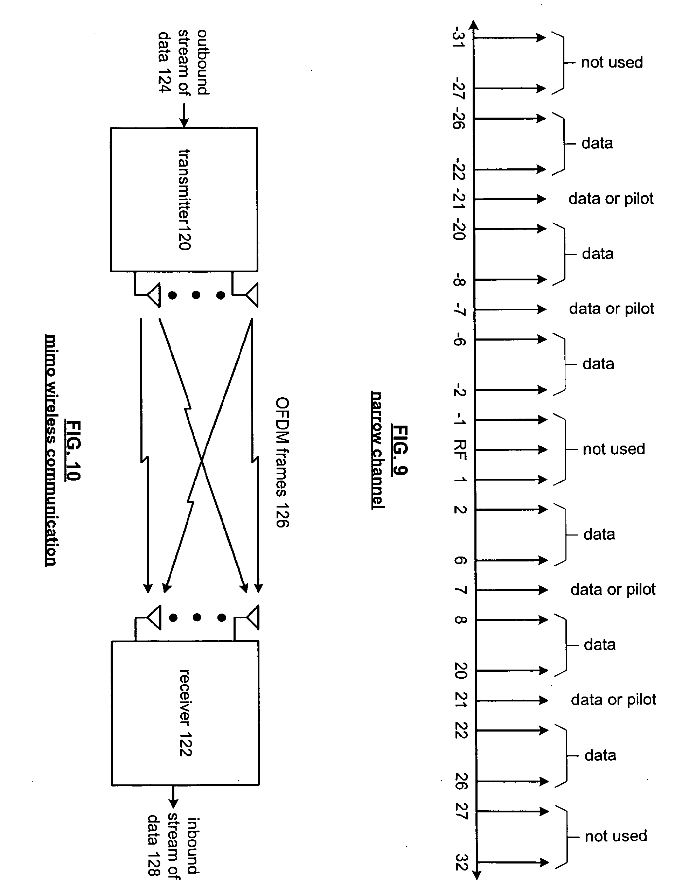

Figure 9 is a diagram of sub-carrier allocation of an OFDM frame for a narrow channel. The narrow channel may have a bandwidth less than 20 MHz and in one embodiment may be 10 MHz. In this instance, sub-carriers 0 and + and -1 are not used because of the issue discussed with reference to Figure 8. In addition, sub-carriers 27-32 and -27 through -31 are not used. In this instance, to replace the loss of sub-carriers -1 and +1, either sub-carrier +7 and -7 or +21 and -21 are used to carry data while the other pair is used to carry pilot tones. In this instance, sub-carriers +1 and -1 are carrying null data.

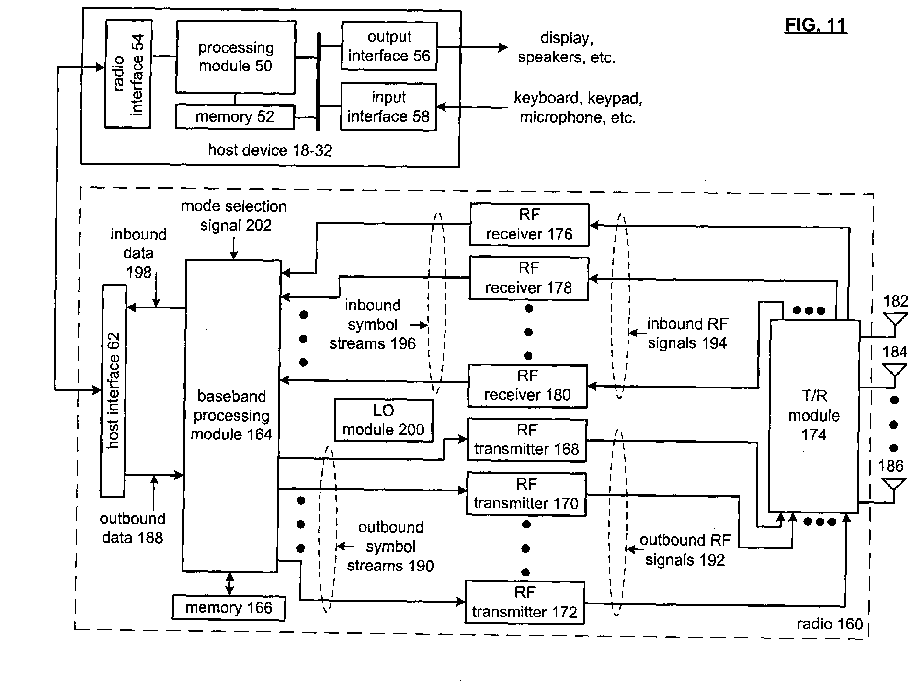

Figure 10 is a schematic block diagram of a multiple-input-multiple-output (MIMO) wireless communication. In this instance, a transmitter 120 of a wireless communication device receives an outbound stream of data 124 and converts it into a plurality of RF signals that each includes a plurality of OFDM frames 126. The receiver 122 receives the plurality of RF signals and converts them into an inbound stream of data 128. The transmitter 120 and receiver 122 will be further described with reference to the wireless communication device of Figure 11.

In this illustration, each of the OFDM frames 126 may have a sub-carrier allocation as illustrated with reference to Figure 6. Further, from path-to-path, the sub-carrier allocation may be different. For example, if there are four wireless communication paths between transmitter 120 and receiver 122, each of the four paths may have a different sub-carrier allocation. For example, one wireless path may have no pilot tones, another may have four pilot tones, and the remaining two may have + and -7 for one pairing and + and -21 for another pairing. As one of ordinary skill in the art will appreciate, because of the multiple communication paths between transmitter 120 and 122, the pilot tones from one path may be utilized to synchronize and/or train another path, or they may be used in conjunction to synchronize and/or train the multiple paths.

Figure 11 is a schematic block diagram illustrating a wireless communication device that includes the host device 18-32 and an associated radio 160. For cellular telephone hosts, the radio 160 is a built-in component. For personal digital assistants hosts, laptop hosts, and/or personal computer hosts, the radio 60 may be built-in or an externally coupled component.

As illustrated, the host device 18-32 includes a processing module 50, memory 52, radio interface 54, input interface 58 and output interface 56. The processing module 50 and memory 52 execute the corresponding instructions that are typically done by the host device. For example, for a cellular telephone host device, the processing module 50 performs the corresponding communication functions in accordance with a particular cellular telephone standard.

The radio interface 54 allows data to be received from and sent to the radio 60. For data received from the radio 60 (e.g., inbound data), the radio interface 54 provides the data to the processing module 50 for further processing and/or routing to the output interface 56. The output interface 56 provides connectivity to an output display device such as a display, monitor, speakers, et cetera such that the received data may be displayed. The radio interface 54 also provides data from the processing module 50 to the radio 60. The processing module 50 may receive the outbound data from an input device such as a keyboard, keypad, microphone, et cetera via the input interface 58 or generate the data itself. For data received via the input interface 58, the processing module 50 may perform a corresponding host function on the data and/or route it to the radio 160 via the radio interface 54.

Radio 160 includes a host interface 162, a baseband processing module 164, memory 166, a plurality of radio frequency (RF) transmitters 168-172, a transmit/receive (T/R) module 174, a plurality of antennas 182-186, a plurality of RF receivers 176-180, and a local oscillation module 200. The baseband processing module 164, in combination with operational instructions stored in memory 166, execute digital receiver functions and digital transmitter functions, respectively. The digital receiver functions include, but are not limited to, digital intermediate frequency to baseband conversion, demodulation, constellation demapping, decoding, de-interleaving, fast Fourier transform, cyclic prefix removal, space and time decoding, and/or descrambling. The digital transmitter functions include, but are not limited to, scrambling, encoding, interleaving, constellation mapping, modulation, inverse fast Fourier transform, cyclic prefix addition, space and time encoding, and/or digital baseband to IF conversion. The baseband processing modules 164 may be implemented using one or more processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory 166 may be a single memory device or a plurality of memory devices. Such a memory device may be a read-only memory, random access memory, volatile memory, non-volatile memory, static memory, dynamic memory, flash memory, and/or any device that stores digital information. Note that when the processing module 64 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

In operation, the radio 160 receives a stream of outbound data 188 from the host device via the host interface 162. The baseband processing module 164 receives the stream of outbound data 188 and, based on a mode selection signal 202, produces one or more outbound symbol streams 190, each of which includes OFDM frames. The mode selection signal 202 will indicate a particular mode as are illustrated in the mode selection tables, which appear at the end of the detailed discussion. For example, the mode selection signal 202, with reference to table 1 may indicate a frequency band of 2.4 GHz, a channel bandwidth of 20 or 22 MHz and a maximum bit rate of 54 megabits-per-second. In this general category, the mode selection signal will further indicate a particular rate ranging from 1 megabit-per-second to 54 megabits-per-second. In addition, the mode selection signal will indicate a particular type of modulation, which includes, but is not limited to, Barker Code Modulation, BPSK, QPSK, CCK, 16 QAM and/or 64 QAM. As is further illustrated in table 1, a code rate is supplied as well as number of coded bits per subcarrier (NBPSC), coded bits per OFDM symbol (NCBPS), data bits per OFDM symbol (NDBPS), error vector magnitude in decibels (EVM), sensitivity which indicates the maximum receive power required to obtain a target packet error rate (e.g., 10% for IEEE 802.11a), adjacent channel rejection (ACR), and an alternate adjacent channel rejection (AACR).

The mode selection signal 202 may also indicate a particular channelization for the corresponding mode which for the information in table 1 is illustrated in table 2. As shown, table 2 includes a channel number and corresponding center frequency. The mode select signal may further indicate a power spectral density mask value which for table 1 is illustrated in table 3. The mode select signal 202 may alternatively indicate rates within table 4 that has a 5 GHz frequency band, 20 MHz channel bandwidth and a maximum bit rate of 54 megabits-per-second. If this is the particular mode select, the channelization is illustrated in table 5. As a further alternative, the mode select signal 102 may indicate a 2.4 GHz frequency band, 20 MHz channels and a maximum bit rate of 192 megabits-per-second as illustrated in table 6. In table 6, a number of antennas may be utilized to achieve the higher bandwidths. In this instance, the mode select would further indicate the number of antennas to be utilized. Table 7 illustrates the channelization for the set-up of table 6. Table 8 illustrates yet another mode option where the frequency band is 2.4 GHz, the channel bandwidth is 20 MHz and the maximum bit rate is 192 megabits-per-second. The corresponding table 8 includes various bit rates ranging from 12 megabits-per-second to 216 megabits-per-second utilizing 2-4 antennas and a spatial time encoding rate as indicated. Table 9 illustrates the channelization for table 8. The mode select signal 202 may further indicate a particular operating mode as illustrated in table 10, which corresponds to a 5 GHz frequency band having 40 MHz frequency band having 40 MHz channels and a maximum bit rate of 486 megabits-per-second. As shown in table 10, the bit rate may range from 13.5 megabits-per-second to 486 megabits-per-second utilizing 1-4 antennas and a corresponding spatial time code rate. Table 10 further illustrates a particular modulation scheme code rate and NBPSC values. Table 11 provides the power spectral density mask for table 10 and table 12 provides the channelization for table 10.

The baseband processing module 164, based on the mode selection signal 202 produces the one or more outbound symbol streams 190, which include OFDM frames as described herein, from the outbound data 188. For example, if the mode selection signal 202 indicates that a single transmit antenna is being utilized for the particular mode that has been selected, the baseband processing module 164 will produce a single outbound symbol stream 190. Alternatively, if the mode select signal indicates 2, 3 or 4 antennas, the baseband processing module 164 will produce 2, 3 or 4 outbound symbol streams 190 corresponding to the number of antennas from the outbound data 188.

Depending on the number of outbound streams 190 produced by the baseband module 164, a corresponding number of the RF transmitters 168-172 will be enabled to convert the outbound symbol streams 190 into outbound RF signals 192. The transmit/receive module 174 receives the outbound RF signals 192 and provides each outbound RF signal to a corresponding antenna 182-186.

When the radio 160 is in the receive mode, the transmit/receive module 174 receives one or more inbound RF signals via the antennas 182-186. The T/R module 174 provides the inbound RF signals 194 to one or more RF receivers 176-180. The RF receivers 176-180 convert the inbound RF signals 194 into a corresponding number of inbound symbol streams 196, which include OFDM frames as described herein. The number of inbound symbol streams 196 will correspond to the particular mode in which the data was received (recall that the mode may be any one of the modes illustrated in tables 1-12). The baseband processing module 160 receives the inbound symbol streams 190 and converts them into a stream of inbound data 198, which is provided to the host device 18-32 via the host interface 162.

As one of average skill in the art will appreciate, the wireless communication device of figure 11 may be implemented using one or more integrated circuits. For example, the host device may be implemented on one integrated circuit, the baseband processing module 164 and memory 166 may be implemented on a second integrated circuit, and the remaining components of the radio 160, less the antennas 182 - 186, may be implemented on a third integrated circuit. As an alternate example, the radio 160 may be implemented on a single integrated circuit. As yet another example, the processing module 150 of the host device and the baseband processing module 164 may be a common processing device implemented on a single integrated circuit. Further, the memory 152 and memory 166 may be implemented on a single integrated circuit and/or on the same integrated circuit as the common processing modules of processing module 150 and the baseband processing module 164.

As one of ordinary skill in the art will appreciate, the term "substantially" or "approximately", as may be used herein, provides an industry-accepted tolerance to its corresponding term and/or relativity between items. Such an industry-accepted tolerance ranges from less than one percent to twenty percent and corresponds to, but is not limited to, component values, integrated circuit process variations, temperature variations, rise and fall times, and/or thermal noise. Such relativity between items ranges from a difference of a few percent to magnitude differences. As one of ordinary skill in the art will further appreciate, the term "operably coupled", as may be used herein, includes direct coupling and indirect coupling via another component, element, circuit, or module where, for indirect coupling, the intervening component, element, circuit, or module does not modify the information of a signal but may adjust its current level, voltage level, and/or power level. As one of ordinary skill in the art will also appreciate, inferred coupling (i.e., where one element is coupled to another element by inference) includes direct and indirect coupling between two elements in the same manner as "operably coupled". As one of ordinary skill in the art will further appreciate, the term "compares favorably", as may be used herein, indicates that a comparison between two or more elements, items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

The preceding discussion has presented various methods and apparatuses for generating and receiving OFDM frames. As one of ordinary skill in the art will appreciate, other embodiments may be derived from the teaching of the present invention without deviating from the scope of the claims.

### Mode Selection Tables:

**Table 1:**

| 2.4 GHz, 20/22 MHz channel BW, 54 Mbps max bit rate | | | | | | | | | |
|---|---|---|---|---|---|---|---|---|---|
| ***Rate*** | ***Modulation*** | ***Code Rate*** | ***NBPSC*** | ***NCBPS*** | ***NDBPS*** | ***EVM*** | ***Sensitivity*** | ***ACR*** | ***AACR*** |
| | Barker | | | | | | | | |
| 1 | BPSK | | | | | | | | |
| | Barker | | | | | | | | |
| 2 | QPSK | | | | | | | | |
| 5.5 | CCK | | | | | | | | |
| 6 | BPSK | 0.5 | 1 | 48 | 24 | -5 | -82 | 16 | 32 |
| 9 | BPSK | 0.75 | 1 | 48 | 36 | -8 | -81 | 15 | 31 |
| 11 | CCK | | | | | | | | |
| 12 | QPSK | 0.5 | 2 | 96 | 48 | -10 | -79 | 13 | 29 |
| 18 | QPSK | 0.75 | 2 | 96 | 72 | -13 | -77 | 11 | 27 |
| 24 | 16-QAM | 0.5 | 4 | 192 | 96 | -16 | -74 | 8 | 24 |
| 36 | 16-QAM | 0.75 | 4 | 192 | 144 | -19 | -70 | 4 | 20 |
| 48 | 64-QAM | 0.666 | 6 | 288 | 192 | -22 | -66 | 0 | 16 |
| 54 | 64-QAM | 0.75 | 6 | 288 | 216 | -25 | -65 | -1 | 15 |

**Table 2:**

| Channelization for Table 1 | |
|---|---|
| ***Channel*** | ***Frequency (MHz)*** |
| 1 | 2412 |
| 2 | 2417 |
| 3 | 2422 |
| 4 | 2427 |
| 5 | 2432 |
| 6 | 2437 |
| 7 | 2442 |
| 8 | 2447 |
| 9 | 2452 |
| 10 | 2457 |
| 11 | 2462 |
| 12 | 2467 |

**Table 3:**

| Power Spectral Density (PSD) Mask for Table 1 | |
|---|---|
| ***PSD Mask*** | ***1*** |
| Frequency Offset | dBr |
| -9 MHz to 9 MHz | 0 |
| + / - 11 MHz | -20 |
| + / - 20 MHz | -28 |
| + / - 30 MHz and | |
| greater | -50 |

**Table 4:**

| 5 GHz, 20 MHz channel BW, 54 Mbps max bit rate | | | | | | | | | |
|---|---|---|---|---|---|---|---|---|---|
| ***Rate*** | ***Modulation*** | ***Code Rate*** | ***NBPSC*** | ***NCBPS*** | ***NDBPS*** | ***EVM*** | ***Sensitivity*** | ***ACR*** | ***AACR*** |
| 6 | BPSK | 0.5 | 1 | 48 | 24 | -5 | -82 | 16 | 32 |
| 9 | BPSK | 0.75 | 1 | 48 | 36 | -8 | -81 | 15 | 31 |
| 12 | QPSK | 0.5 | 2 | 96 | 48 | -10 | -79 | 13 | 29 |
| 18 | QPSK | 0.75 | 2 | 96 | 72 | -13 | -77 | 11 | 27 |
| 24 | 16-QAM | 0.5 | 4 | 192 | 96 | -16 | -74 | 8 | 24 |
| 36 | 16-QAM | 0.75 | 4 | 192 | 144 | -19 | -70 | 4 | 20 |
| 48 | 64-QAM | 0.666 | 6 | 288 | 192 | -22 | -66 | 0 | 16 |
| 54 | 64-QAM | 0.75 | 6 | 288 | 216 | -25 | -65 | -1 | 15 |

**Table 5:**

| Channelization for Table 4 | | | | | |
|---|---|---|---|---|---|
| ***Channel*** | ***Frequency (MHz)*** | ***Country*** | ***Channel*** | ***Frequency (MHz)*** | ***Country*** |
| 240 | 4920 | Japan | | | |
| 244 | 4940 | Japan | | | |
| 248 | 4960 | Japan | | | |
| 252 | 4980 | Japan | | | |
| 8 | 5040 | Japan | | | |
| 12 | 5060 | Japan | | | |
| 16 | 5080 | Japan | | | |
| 36 | 5180 | USA/Europe | 34 | 5170 | Japan |
| 40 | 5200 | USA/Europe | 38 | 5190 | Japan |
| 44 | 5220 | USA/Europe | 42 | 5210 | Japan |
| 48 | 5240 | USA/Europe | 46 | 5230 | Japan |
| 52 | 5260 | USA/Europe | | | |
| 56 | 5280 | USA/Europe | | | |
| 60 | 5300 | USA/Europe | | | |
| 64 | 5320 | USA/Europe | | | |
| 100 | 5500 | USA/Europe | | | |
| 104 | 5520 | USA/Europe | | | |
| 108 | 5540 | USA/Europe | | | |
| 112 | 5560 | USA/Europe | | | |
| 116 | 5580 | USA/Europe | | | |
| 120 | 5600 | USA/Europe | | | |
| 124 | 5620 | USA/Europe | | | |
| 128 | 5640 | USA/Europe | | | |
| 132 | 5660 | USA/Europe | | | |
| 136 | 5680 | USA/Europe | | | |
| 140 | 5700 | USA/Europe | | | |
| 149 | 5745 | USA | | | |
| 153 | 5765 | USA | | | |
| 157 | 5785 | USA | | | |
| 161 | 5805 | USA | | | |
| 165 | 5825 | USA | | | |

**Table 6:**

| 2.4 GHz, 20 MHz channel BW, 192 Mbps max bit rate | | | | | | | |
|---|---|---|---|---|---|---|---|
| ***Rate*** | ***TX Antennas*** | ***ST Code Rate*** | ***Modulation*** | ***Code Rate*** | ***NBPSC*** | ***NCBPS*** | ***NDBPS*** |
| 12 | 2 | 1 | BPSK | 0.5 | 1 | 48 | 24 |
| 24 | 2 | 1 | QPSK | 0.5 | 2 | 96 | 48 |
| 48 | 2 | 1 | 16-QAM | 0.5 | 4 | 192 | 96 |
| 96 | 2 | 1 | 64-QAM | 0.666 | 6 | 288 | 192 |
| 108 | 2 | 1 | 64-QAM | 0.75 | 6 | 288 | 216 |
| 18 | 3 | 1 | BPSK | 0.5 | 1 | 48 | 24 |
| 36 | 3 | 1 | QPSK | 0.5 | 2 | 96 | 48 |
| 72 | 3 | 1 | 16-QAM | 0.5 | 4 | 192 | 96 |
| 144 | 3 | 1 | 64-QAM | 0.666 | 6 | 288 | 192 |
| 162 | 3 | 1 | 64-QAM | 0.75 | 6 | 288 | 216 |
| 24 | 4 | 1 | BPSK | 0.5 | 1 | 48 | 24 |
| 48 | 4 | 1 | QPSK | 0.5 | 2 | 96 | 48 |
| 96 | 4 | 1 | 16-QAM | 0.5 | 4 | 192 | 96 |
| 192 | 4 | 1 | 64-QAM | 0.666 | 6 | 288 | 192 |
| 216 | 4 | 1 | 64-QAM | 0.75 | 6 | 288 | 216 |

**Table 7:**

| Channelization for Table 6 | |
|---|---|
| ***Channel*** | ***Frequency (MHz)*** |
| 1 | 2412 |
| 2 | 2417 |
| 3 | 2422 |
| 4 | 2427 |
| 5 | 2432 |
| 6 | 2437 |
| 7 | 2442 |
| 8 | 2447 |
| 9 | 2452 |
| 10 | 2457 |
| 11 | 2462 |
| 12 | 2467 |

**Table 8:**

| 5 GHz, 20 MHz channel BW, 192 Mbps max bit rate | | | | | | | |
|---|---|---|---|---|---|---|---|
| ***Rate*** | ***TX Antennas*** | ***ST Code Rate*** | ***Modulation*** | ***Code Rate*** | ***NBPSC*** | ***NCBPS*** | ***NDBPS*** |
| 12 | 2 | 1 | BPSK | 0.5 | 1 | 48 | 24 |
| 24 | 2 | 1 | QPSK | 0.5 | 2 | 96 | 48 |
| 48 | 2 | 1 | 16-QAM | 0.5 | 4 | 192 | 96 |
| 96 | 2 | 1 | 64-QAM | 0.666 | 6 | 288 | 192 |
| 108 | 2 | 1 | 64-QAM | 0.75 | 6 | 288 | 216 |
| 18 | 3 | 1 | BPSK | 0.5 | 1 | 48 | 24 |
| 36 | 3 | 1 | QPSK | 0.5 | 2 | 96 | 48 |
| 72 | 3 | 1 | 16-QAM | 0.5 | 4 | 192 | 96 |
| 144 | 3 | 1 | 64-QAM | 0.666 | 6 | 288 | 192 |
| 162 | 3 | 1 | 64-QAM | 0.75 | 6 | 288 | 216 |
| 24 | 4 | 1 | BPSK | 0.5 | 1 | 48 | 24 |
| 48 | 4 | 1 | QPSK | 0.5 | 2 | 96 | 48 |
| 96 | 4 | 1 | 16-QAM | 0.5 | 4 | 192 | 96 |
| 192 | 4 | 1 | 64-QAM | 0.666 | 6 | 288 | 192 |
| 216 | 4 | 1 | 64-QAM | 0.75 | 6 | 288 | 216 |

**Table 9:**

| channelization for Table 8 | | | | | |
|---|---|---|---|---|---|
| ***Channel*** | ***Frequency (MHz)*** | ***Country*** | ***Channel*** | ***Frequency (MHz)*** | ***Country*** |
| 240 | 4920 | Japan | | | |
| 244 | 4940 | Japan | | | |
| 248 | 4960 | Japan | | | |
| 252 | 4980 | Japan | | | |
| 8 | 5040 | Japan | | | |
| 12 | 5060 | Japan | | | |
| 16 | 5080 | Japan | | | |
| 36 | 5180 | USA/Europe | 34 | 5170 | Japan |
| 40 | 5200 | USA/Europe | 38 | 5190 | Japan |
| 44 | 5220 | USA/Europe | 42 | 5210 | Japan |
| 48 | 5240 | USA/Europe | 46 | 5230 | Japan |
| 52 | 5260 | USA/Europe | | | |
| 56 | 5280 | USA/Europe | | | |
| 60 | 5300 | USA/Europe | | | |
| 64 | 5320 | USA/Europe | | | |
| 100 | 5500 | USA/Europe | | | |
| 104 | 5520 | USA/Europe | | | |
| 108 | 5540 | USA/Europe | | | |
| 112 | 5560 | USA/Europe | | | |
| 116 | 5580 | USA/Europe | | | |
| 120 | 5600 | USA/Europe | | | |
| 124 | 5620 | USA/Europe | | | |
| 128 | 5640 | USA/Europe | | | |
| 132 | 5660 | USA/Europe | | | |
| 136 | 5680 | USA/Europe | | | |
| 140 | 5700 | USA/Europe | | | |
| 149 | 5745 | USA | | | |
| 153 | 5765 | USA | | | |
| 157 | 5785 | USA | | | |
| 161 | 5805 | USA | | | |
| 165 | 5825 | USA | | | |

**Table 10:**

| 5 GHz, with 40 MHz channels and max bit rate of 486 Mbps | | | | | |
|---|---|---|---|---|---|
| ***Rate*** | ***TX Antennas*** | ***ST Code Rate*** | ***Modulation*** | ***Code Rate*** | ***NBPSC*** |
| 13.5 Mbps | 1 | 1 | BPSK | 0.5 | 1 |
| 27 Mbps | 1 | 1 | QPSK | 0.5 | 2 |
| 54 Mbps | 1 | 1 | 16-QAM | 0.5 | 4 |
| 108 Mbps | 1 | 1 | 64-QAM | 0.666 | 6 |
| 121.5 Mbps | 1 | 1 | 64-QAM | 0.75 | 6 |
| 27 Mbps | 2 | 1 | BPSK | 0.5 | 1 |
| 54 Mbps | 2 | 1 | QPSK | 0.5 | 2 |
| 108 Mbps | 2 | 1 | 16-QAM | 0.5 | 4 |
| 216 Mbps | 2 | 1 | 64-QAM | 0.666 | 6 |
| 243 Mbps | 2 | 1 | 64-QAM | 0.75 | 6 |
| 40.5 Mbps | 3 | 1 | BPSK | 0.5 | 1 |
| 81 Mbps | 3 | 1 | QPSK | 0.5 | 2 |
| 162 Mbps | 3 | 1 | 16-QAM | 0.5 | 4 |
| 324 Mbps | 3 | 1 | 64-QAM | 0.666 | 6 |
| 365.5 Mbps | 3 | 1 | 64-QAM | 0.75 | 6 |
| 54 Mbps | 4 | 1 | BPSK | 0.5 | 1 |
| 108 Mbps | 4 | 1 | QPSK | 0.5 | 2 |
| 216 Mbps | 4 | 1 | 16-QAM | 0.5 | 4 |
| 432 Mbps | 4 | 1 | 64-QAM | 0.666 | 6 |
| 486 Mbps | 4 | 1 | 64-QAM | 0.75 | 6 |

**Table 11:**

| Power Spectral Density (PSD) mask for Table 10 | |
|---|---|
| ***PSD Mask*** | ***2*** |
| Frequency Offset | dBr |
| -19 MHz to 19 MHz | 0 |
| + / - 21 MHz | -20 |
| + /- 30MHz | -28 |
| + / - 40 MHz and greater | -50 |

**Table 12:**

| Channelization for Table 10 | | | | | |
|---|---|---|---|---|---|
| ***Channel*** | ***Frequency (MHz)*** | ***Country*** | ***Channel*** | ***Frequency (MHz)*** | ***County*** |
| 242 | 4930 | Japan | | | |
| 250 | 4970 | Japan | | | |
| 12 | 5060 | Japan | | | |
| 38 | 5190 | USA/Europe | 36 | 5180 | Japan |
| 46 | 5230 | USA/Europe | 44 | 5520 | Japan |
| 54 | 5270 | USA/Europe | | | |
| 62 | 5310 | USA/Europe | | | |
| 102 | 5510 | USA/Europe | | | |
| 110 | 5550 | USA/Europe | | | |
| 118 | 5590 | USA/Europe | | | |
| 126 | 5630 | USA/Europe | | | |
| 134 | 5670 | USA/Europe | | | |
| 151 | 5755 | USA | | | |
| 159 | 5795 | USA | | | |

## Claims

1. A method for generating an orthogonal frequency division multiplexing (OFDM) frame for wireless communications, the method comprising:
generating a preamble of the OFDM frame, wherein the preamble includes training information and signal information; and
generating a plurality of data fields of the OFDM frame, wherein each of the plurality of data fields includes a plurality of subcarriers, wherein at least some of the plurality of data fields includes, at most, three of the plurality of subcarriers allocated for a pilot signal.

2. The method of claim 1 further comprises:
transmitting the OFDM frame over a narrow band channel, wherein the narrow band channel has a channel width less than twenty mega-Hertz.

3. The method of claim 2, wherein the generating the plurality of data fields comprises:
utilizing subcarrier positions plus seven and minus seven of each of the at least some of the plurality of data fields to carry data; and
nulling subcarrier positions plus one and minus one of each of the at least some of the plurality of data fields.

4. A method for generating an orthogonal frequency division multiplexing (OFDM) frame for multiple input multiple output (MIMO) wireless communications, the method comprises:
converting a stream of data into a plurality of data streams; and
converting the plurality of data streams into a plurality of OFDM frames, wherein each of the plurality of OFDM frames includes a preamble that includes training information and signal information, wherein each of the plurality of OFDM frames includes a plurality of data fields, wherein each of the plurality of data fields of each of the plurality of OFDM frames includes a plurality of subcarriers, wherein at least some of the plurality of data fields of at least one of the plurality of OFDM frames includes, at most, three of the plurality of subcarriers allocated for a pilot signal.

5. A method for receiving an orthogonal frequency division multiplexing (OFDM) frame for wireless communications, the method comprises:
receiving a preamble of the OFDM frame, wherein the preamble includes training information and signal information;
receiving a plurality of data fields of the OFDM frame, wherein each of the plurality of data fields includes a plurality of subcarriers, wherein, as indicated by the signals information, at least some of the plurality of data fields includes, at most, three of the plurality of subcarriers allocated for a pilot signal; and
converting the plurality of data fields into inbound data.

6. A method for receiving an orthogonal frequency division multiplexing (OFDM) frame for multiple input multiple output (MIMO) wireless communications, the method comprises:
receiving a plurality of OFDM frames, wherein each of the plurality of OFDM frames includes a preamble that includes training information and signal information, wherein each of the plurality of OFDM frames includes a plurality of data fields, wherein each of the plurality of data fields of each of the plurality of OFDM frames includes a plurality of subcarriers, wherein, as indicated by the signal information, at least some of the plurality of data fields of at least one of the plurality of OFDM frames includes, at most, three of the plurality of subcarriers allocated for a pilot signal;
converting the plurality of OFDM frames into a plurality of data streams; and
converting the plurality of data streams into a stream of data.

7. A radio frequency (RF) transmitter comprises:
a baseband processing module operably coupled to generate an orthogonal frequency division multiplexing (OFDM) frame by:
generating a preamble of the OFDM frame, wherein the preamble includes training information and signal information; and
generating a plurality of data fields of the OFDM frame, wherein each of the plurality of data fields includes a plurality of subcarriers, wherein at least some of the plurality of data fields includes, at most, three of the plurality of subcarriers allocated for a pilot signal; and
RF transmission section operably coupled to convert the OFDM frame into outbound RF signals.

8. A radio frequency (RF) transmitter comprises:
a baseband processing module operably coupled to generate an orthogonal frequency division multiplexing (OFDM) frame for multiple input multiple output (MIMO) wireless communications by:
converting a stream of data into a plurality of data streams; and
converting the plurality of data streams into a plurality of OFDM frames, wherein each of the plurality of OFDM frames includes a preamble that includes training information and signal information, wherein each of the plurality of OFDM frames includes a plurality of data fields, wherein each of the plurality of data fields of each of the plurality of OFDM frames includes a plurality of subcarriers, wherein at least some of the plurality of data fields of at least one of the plurality of OFDM frames includes, at most, three of the plurality of subcarriers allocated for a pilot signal; and
RF transmission section operably coupled to convert the plurality of OFDM frames into a plurality of outbound RF signals.

9. A radio frequency (RF) receiver comprises:
a RF receiver section operably coupled to convert inbound RF signals into an orthogonal frequency division multiplexing (OFDM) frame; and
a baseband processing module operably coupled to:
receive a preamble of the OFDM frame, wherein the preamble includes training information and signal information; and
receive a plurality of data fields of the OFDM frame, wherein each of the plurality of data fields includes a plurality of subcarriers, wherein, as indicated by the signals information, at least some of the plurality of data fields includes, at most, three of the plurality of subcarriers allocated for a pilot signal; and
convert the plurality of data fields into inbound data.

10. A radio frequency (RF) receiver comprises:
a RF receiver section operably coupled to, for multiple input multiple output (MIMO) wireless communications, convert inbound RF signals into a plurality of orthogonal frequency division multiplexing (OFDM) frames; and
a baseband processing module operably coupled to:
receive the plurality of OFDM frames, wherein each of the plurality of OFDM frames includes a preamble that includes training information and signal information, wherein each of the plurality of OFDM frames includes a plurality of data fields, wherein each of the plurality of data fields of each of the plurality of OFDM frames includes a plurality of subcarriers, wherein, as indicated by the signal information, at least some of the plurality of data fields of at least one of the plurality of OFDM frames includes, at most, three of the plurality of subcarriers allocated for a pilot signal;
convert the plurality of OFDM frames into a plurality of data streams; and
convert the plurality of data streams into a stream of data.
